# DEMANDE DE BREVET EUROPEEN

(11) **EP 3 808 226 A1**
(43) Date de publication de la demande: **21.04.2021**
(21) Numéro de dépôt: 20202339.6
(22) Date de dépôt: 16.10.2020
(51) Int. Cl.: A47G 7/07, A01G 9/02, A01G 5/02, A01G 5/06

(54) **CONFORMATEUR POUR LA PRÉSENTATION DE BOUQUET DE FLEURS ET DISPOSITIF POUR LA PRÉSENTATION ET LA CONSERVATION DE BOUQUET DE FLEURS COMPRENANT UN TEL CONFORMATEUR**

(30) Priorité: 17.10.2019 FR 1911570
(71) Demandeur: Ellece, 44470 Thouare-sur-Loire (FR)
(72) Inventeur: SURRIRAY, Laurent, 44470 Thouare Sur Loire (FR)
(74) Mandataire: Ipsilon

(57) **Abrégé**

Conformateur (2) pour la présentation de bouquet (14) de fleurs, ledit conformateur (2) étant recouvrable au moins partiellement par une enveloppe (3) souple imperméable à l'eau pour former en coopération avec ladite enveloppe (3) un vase à réserve d'eau en forme de bulle.

Le conformateur (2) affecte la forme d'un pot comprenant un fond (6) et une paroi (7) latérale périphérique plissée. La paroi (7) latérale périphérique plissée se raccorde par l'un de ses bords dit inférieur au fond (6) et délimite par son bord (9) supérieur opposée une ouverture (10) du pot. Ladite paroi (7) latérale périphérique plissée, à plis dits axiaux s'étendant depuis le bord (9) supérieur en direction du bord inférieur de ladite paroi (7), est une paroi souple déformable réalisée d'une seule pièce avec le fond (6) en une matière de synthèse et le pot comprend au moins un orifice pour le passage d'eau.

## Description

La présente invention concerne un conformateur pour la présentation de bouquet de fleurs ainsi qu'un dispositif pour la présentation et la conservation de bouquet de fleurs comprenant un tel conformateur.

L'invention concerne en particulier un conformateur pour la présentation de bouquet de fleurs, ledit conformateur étant recouvrable au moins partiellement par une enveloppe souple imperméable à l'eau pour former en coopération avec ladite enveloppe un vase à réserve d'eau en forme de bulle.

La réalisation d'un bouquet appelé bouquet bulle à l'aide d'un conformateur est connue comme l'illustre par exemple le brevet FR 2870832. Toutefois, les solutions développées jusqu'à présent ne donnent pas entière satisfaction. En particulier, il existe un risque élevé de déchirure de l'enveloppe par les extrémités libres des tiges des fleurs du bouquet.

Un but de l'invention est de proposer un conformateur et un dispositif pour la présentation et la conservation de bouquet de fleurs comprenant un tel conformateur dont les conceptions permettent de limiter le risque de déchirure de l'enveloppe par les extrémités libres des tiges des fleurs du bouquet sans nuire à la qualité de la présentation du bouquet.

A cet effet, l'invention a pour objet un conformateur pour la présentation de bouquet de fleurs, ledit conformateur étant recouvrable au moins partiellement par une enveloppe souple imperméable à l'eau pour former en coopération avec ladite enveloppe un vase à réserve d'eau en forme de bulle, caractérisé en ce que le conformateur affecte la forme d'un pot, en ce que le pot comprend un fond et une paroi latérale périphérique plissée, en ce que la paroi latérale périphérique plissée se raccorde par l'un de ses bords dit inférieur au fond et délimite par son bord supérieur opposé une ouverture du pot, en ce que ladite paroi latérale périphérique plissée, à plis dits axiaux s'étendant depuis le bord supérieur en direction du bord inférieur de ladite paroi, est une paroi souple déformable réalisée d'une seule pièce avec le fond en une matière de synthèse et en ce que le pot comprend au moins un orifice pour le passage d'eau. La réalisation du conformateur sous forme d'un pot avec une paroi latérale périphérique plissée pleine continue permet d'éviter un contact des extrémités libres des tiges des fleurs du bouquet avec l'enveloppe comme cela était le cas dans l'état de la technique. La présence d'au moins un orifice pour le passage d'eau permet à une partie de l'eau de remplissage du pot de passer entre le pot et l'enveloppe pour conférer à l'enveloppe une forme extérieure la plus proche d'une bulle. Cette présence d'orifices permet un remplissage de la bulle depuis l'intérieur ou l'extérieur du pot. La paroi latérale périphérique plissée qui est une paroi déformable permet une variation de la dimension de l'ouverture du pot par simple rapprochement ou écartement des plis de ladite paroi latérale périphérique plissée. Il en résulte une adaptation aisée à des bouquets de fleurs de dimension différente.

Selon un mode de réalisation de l'invention, le ou au moins l'un des orifices de passage d'eau est ménagé dans la paroi latérale périphérique plissée du pot. Cet au moins un orifice de passage d'eau est disposé à proximité du fond du pot.

Selon un mode de réalisation de l'invention, au moins l'un des plis de la paroi latérale périphérique plissée du pot est un pli en escalier ménageant au moins une marche. La ou chaque marche dudit pli s'étend transversalement à l'axe longitudinal du pli. L'escalier se développe depuis le bord inférieur en direction du bord supérieur de la paroi latérale périphérique plissée.

Selon un mode de réalisation de l'invention, au moins l'un des orifices pour le passage d'eau est un orifice axial disposé au niveau de ladite marche.. Cet orifice est un orifice particulièrement discret. Pour autant, le passage d'eau depuis l'intérieur du pot en direction de l'extérieur du pot s'effectue suivant un trajet simple sans chicane.

Selon un mode de réalisation de l'invention, la paroi latérale périphérique plissée s'évase en direction de l'ouverture du pot. Cet évasement permet de former une zone de rétention d'un lien de serrage permettant le maintien de l'enveloppe sur le conformateur.

Selon un mode de réalisation de l'invention, au moins une partie du fond du pot est surélevée. Grâce à cette surélévation du fond, un bombement du fond qui pourrait résulter du poids de l'eau à l'intérieur du pot n'entraine pas d'instabilité du pot à l'état posé du pot sur une surface plane.

Selon un mode de réalisation de l'invention, le fond est muni d'au moins un élément de renfort réalisé d'une seule pièce avec ledit fond. Le fond est donc muni d'un ou plusieurs éléments de renfort réalisés chacun d'une seule pièce avec ledit fond. La rigidification du fond permet de limiter les risques d'un bombement du fond tel que décrit ci-dessus. Le ou au moins l'un des éléments de renfort affecte de préférence la forme d'une nervure de rigidification en saillie en direction de l'intérieur du pot.

Le ou au moins l'un des éléments de renfort est ménagé dans la partie surélevée du fond.

Selon un mode de réalisation de l'invention, les ou au moins deux des éléments de renfort affectent chacun la forme d'une nervure en saillie en direction de l'intérieur du pot, lesdites nervures ou au moins deux desdites nervures délimitant chacune un périmètre fermé avec l'une des nervures entourant l'autre nervure. Lesdites nervures ménagent entre elles à la manière de trottoirs une surface d'appui sur laquelle au moins une partie des extrémités libres des tiges de fleurs peuvent reposer.

Selon un mode de réalisation de l'invention, le ou au moins l'un des orifices de passage d'eau est ménagé au niveau du ou de l'un des éléments de renfort. Lorsque cet élément de renfort affecte la forme d'une nervure de rigidification en saillie en direction de l'intérieur du pot, cette nervure de rigidification comprenant un sommet et deux flancs, et le ou au moins l'un des orifices de passage d'eau est ménagé au niveau du sommet de ladite nervure.

Selon un mode de réalisation de l'invention, la paroi latérale plissée est formée d'une alternance de plis nervurés creux ouverts en direction de l'intérieur du pot et de plis concaves à concavité tournée vers l'extérieur du pot pour former, en vue en coupe transversale du pot, une crénelure. La présence de plis concaves permet un contact non agressif avec les plantes. En outre, la présence d'une succession de plis concaves et de plis nervurés peut permettre en position rapprochée desdits plis, l'obtention d'une surface externe de la paroi latérale périphérique plissée au moins partiellement plane.

Selon un mode de réalisation de l'invention, chaque pli de la paroi latérale périphérique plissée est délimité par deux flancs et un sommet de liaison desdits flancs et le sommet des plis nervurés est un sommet plat. Ainsi, les sommets plats sont accolés sur au moins une partie de la longueur des plis en position rapprochée des plis de la paroi latérale périphérique plissée pour former une surface plane.

Selon un mode de réalisation de l'invention, chaque pli de la paroi latérale périphérique plissée est délimité par deux flancs et un sommet de liaison desdits flancs et le sommet des plis concaves est un sommet arrondi. Ainsi, le contact des plis concaves avec le bouquet de fleurs est un contact non agressif.

L'invention a encore pour objet un dispositif pour la présentation et la conservation de bouquet de fleurs comprenant au moins un conformateur, une enveloppe souple imperméable à l'eau positionnable à recouvrement au moins partiel du conformateur pour former en coopération avec le conformateur un vase à réserve d'eau en forme de bulle et un organe de serrage de ladite enveloppe sur le conformateur, caractérisé en ce que le conformateur est du type précité.

Selon un mode de réalisation de l'invention, à l'état posé de l'organe de serrage, le conformateur à affecte la forme d'un pot conique ou tronconique avec la base du cône ou du tronc de cône formée par le fond du pot.

### Brève description des dessins

L'invention sera bien comprise à la lecture de la description suivante d'exemples de réalisation, en référence aux dessins annexés dans lesquels :
[Fig. 1] représente une vue schématique simplifiée en perspective d'un dispositif pour la présentation et la conservation de bouquet de fleurs à l'état inséré du bouquet de fleurs dans le dispositif ;
[Fig. 2] représente une vue en perspective d'un conformateur à l'état sollicité dans le sens d'un rapprochement des plis de la paroi latérale périphérique plissée du pot constitutif du conformateur ;

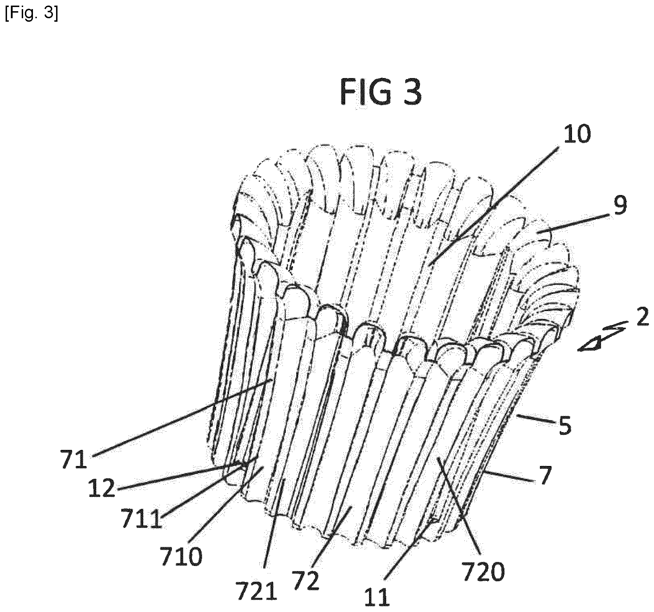

[Fig. 3] représente une vue en perspective prise sous un autre angle d'un conformateur à l'état non sollicité des plis de la paroi latérale périphérique plissée du pot constitutif du conformateur ;

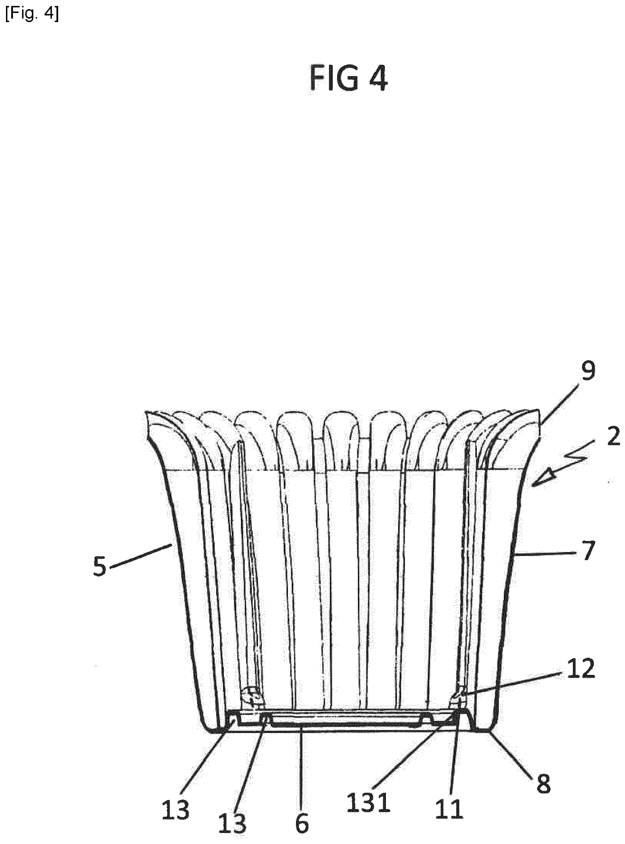

[Fig. 4] représente une vue partiellement en coupe d'un conformateur à l'état non sollicité des plis de la paroi latérale périphérique plissée du pot constitutif du conformateur ;

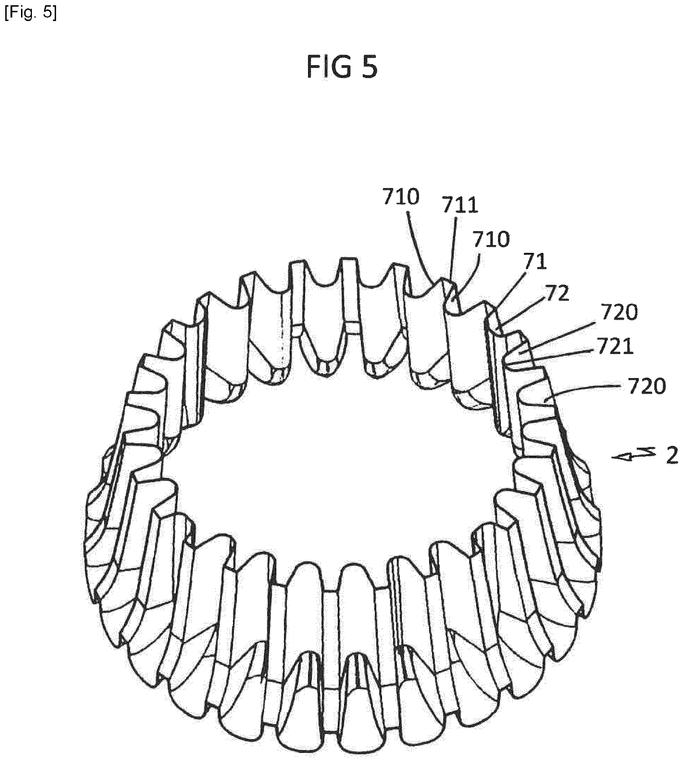

[Fig. 5] représente une vue d'un conformateur à l'état non sollicité des plis de la paroi latérale périphérique plissée du pot constitutif du conformateur, ledit conformateur étant positionné à l'envers et le fond ayant été omis pour visualiser la crénelure formée par la paroi latérale périphérique plissée.

Comme mentionné ci-dessus, le conformateur 2 objet de l'invention servant à la réception d'un bouquet 14 de fleurs et à sa tenue ainsi qu'à la conformation de la bulle est destiné à être recouvert au moins partiellement par une enveloppe 3 souple imperméable à l'eau pour former, en coopération avec le conformateur 2, un vase à réserve d'eau. L'enveloppe 3 souple est maintenue en position sur ledit conformateur 2 à l'aide d'un organe 4 de serrage, tel qu'un élastique, qui maintient le conformateur 2 autour du bouquet 14 de fleurs et l'enveloppe 3 qui se présente, avant conformation, sous forme d'une feuille, autour du conformateur 2.

Le dispositif 1 pour la présentation et la conservation de bouquet 14 de fleurs comprenant le conformateur 2, l'enveloppe 3 et l'organe 4 de serrage décrit ci-dessus permet ainsi la réalisation d'un bouquet appelé bouquet bulle en raison de la forme en bulle de la réserve d'eau.

La réalisation d'un tel bouquet peut s'opérer de manière manuelle ou automatique, à l'aide d'un poste de travail comprenant une table de conditionnement munie d'une ouverture sur laquelle l'enveloppe de type feuille et le conformateur peuvent être disposés, comme décrit par exemple dans le brevet FR 2 884 683.

De manière caractéristique à l'invention, le conformateur 2 affecte la forme d'un pot 5. Ce pot 5 comprend un fond 6 et une paroi 7 latérale périphérique plissée délimitant une ouverture 10 du pot 5 par laquelle le bouquet 14 de fleurs est introduit dans le pot 5 formant le conformateur 2.

Cette ouverture 10 du pot est délimitée par le bord 9 supérieur de la paroi 7 latérale périphérique plissée, tandis que le bord 8 inférieur opposé au bord 9 supérieur de ladite paroi 7 périphérique plissée est relié au fond 6 du pot 5.

Les plis représentés en 71 et 72 aux figures de la paroi 7 latérale périphérique plissée sont des plis dits axiaux qui s'étendent depuis le bord 9 supérieur en direction du bord 8 inférieur. En d'autres termes, l'axe longitudinal des plis s'étend depuis le bord 9 supérieur en direction du bord 8 inférieur de ladite paroi 7 latérale périphérique plissée.

Dans les exemples représentés, la paroi 7 latérale périphérique plissée est formée d'une alternance de plis 71 nervurés creux, ouverts en direction de l'intérieur du pot, et de plis 72 concaves à concavité tournée vers l'extérieur du pot 5 pour former, en vue en coupe transversale du pot 5, une crénelure. Chaque pli de la paroi 7 latérale périphérique plissée est délimité par deux flancs et un sommet de liaison desdits flancs. Ainsi, chaque pli 71 nervuré est délimité par deux flancs 710 et un sommet 711 de liaison desdits flancs 710 entre eux, ce sommet 711 étant plat, tandis que chaque pli 72 concave est délimité par deux flancs 720 et un sommet 721 de liaison des flancs, ce sommet 721 des plis concaves, au contact du bouquet de fleurs, étant un sommet arrondi.

La paroi 7 latérale périphérique plissée et le fond 6 sont réalisés d'une seule pièce en une matière de synthèse, telle que du polyéthylène. De préférence, le conformateur est réalisé par thermoformage. Le conformateur est donc de préférence une pièce thermoformée.

Le pot 5 est un pot cylindro-conique, en particulier le pot 5 affecte ici une forme générale tronconique avec la petite base du tronc de cône formée par le fond 6 du pot 5 à l'état non déformé de la paroi 7 latérale périphérique plissée.

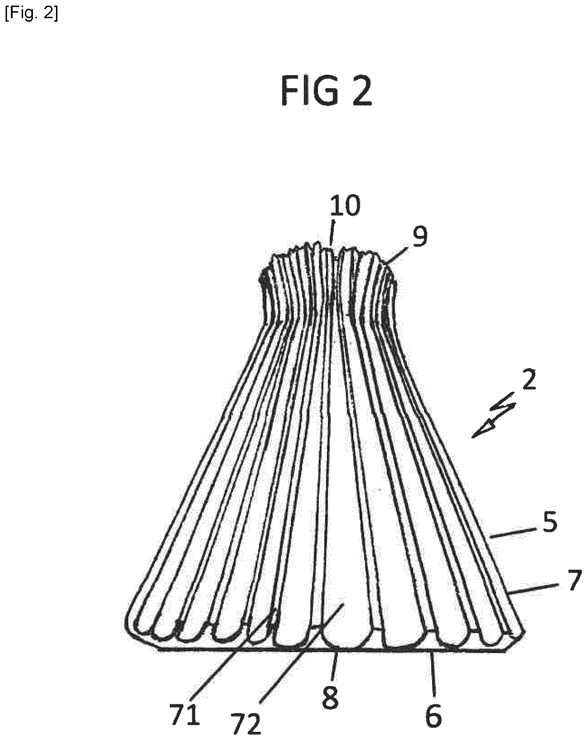

La paroi 7 latérale périphérique plissée est déformable par rapprochement des plis pour conférer au pot 5 une forme générale tronconique ou conique, comme illustré à la figure 2 où le fond 6 du pot 5 forme alors la grande base du cône ou du tronc de cône.

Dans cette configuration de rapprochement des plis, l'ouverture 10 du pot 5 est de dimension réduite, les bords de l'ouverture 10 étant en appui sur les tiges du bouquet.

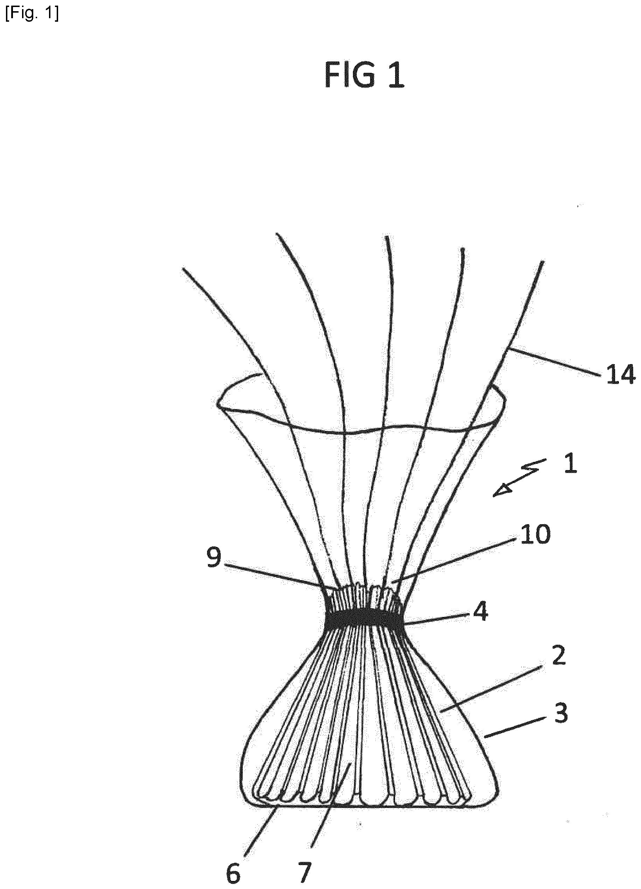

Le pot 5 peut être maintenu dans cette configuration de rapprochement des plis 71, 72 par un organe 4 de serrage qui s'étend autour de l'ouverture 10 du conformateur et autour de l'enveloppe 3 venant à recouvrement partiel du conformateur 2 comme illustré à la figure 1.

L'ouverture 10 du pot 5 est donc de dimension ajustable par simple rapprochement ou écartement des plis de la paroi 7 latérale périphérique plissée du pot 5. En pratique, une fois le bouquet 14 de fleurs introduit dans le pot 5 à travers l'ouverture 10, la paroi 7 latérale périphérique plissée est en général déformée par rapprochement des plis 71, 72. De préférence, au moins l'un des plis de la paroi latérale périphérique plissée du pot est un pli en escalier ménageant au moins une marche. Tel est le cas dans l'exemple représenté où au moins certains des plis présentent une marche s'étendant transversalement à l'axe longitudinal du pli.

Le pot 5 comprend encore au moins un orifice 11 pour le passage d'eau.

Dans l'exemple représenté, il est prévu quatre orifices 11 de passage d'eau dont seulement deux sont visibles. Ces orifices 11 de passage d'eau sont répartis circonférentiellement sur la paroi 7 latérale périphérique plissée. En effet, dans l'exemple représenté, chacun des orifices 11 de passage d'eau est ménagé dans la paroi 7 latérale périphérique plissée du pot, à chaque fois au niveau d'un pli de ladite paroi. Chaque pli muni d'un tel orifice est séparé d'un pli similaire d'un angle de 90°. Chaque pli au niveau duquel un orifice 11 de passage d'eau est ménagé est un pli en escalier définissant une marche 12, l'orifice 11 de passage d'eau étant un orifice axial disposé au niveau de ladite marche 12.

Une partie de l'eau introduite dans le pot pour la conservation des fleurs du bouquet peut ainsi passer par les orifices 11 de passage d'eau pour venir s'insérer entre le pot 5 et l'enveloppe 3 venant à recouvrement au moins partiel du pot 5. Il est également possible de procéder à un remplissage du pot à partir de l'enveloppe.

Pour parfaire l'ensemble, à l'état non déformé de la paroi 7 latérale périphérique plissée, la paroi 7 latérale périphérique plissée s'évase en direction de l'ouverture 10 du pot 5. Cet évasement s'opère par courbure de la paroi 7 latérale périphérique plissée au niveau de son bord 9 supérieur en direction de l'extérieur du pot 5. Le creux de la courbure permet de former une zone de maintien de l'organe 4 de serrage formé généralement par un lien de préférence élastiquement déformable autour du pot 5.

Enfin, on note que dans les exemples représentés, au moins une partie du fond 6 du pot 5, en particulier la partie centrale du fond 6 est surélevée pour permettre une déformation du fond 6 par bombement, sans nuire à la stabilité du pot 5 reposant sur une surface plane. Pour limiter les risques d'un tel bombement, le fond 6 est muni d'au moins un élément 13 de renfort réalisé d'une seule pièce avec ledit fond 6. Le ou au moins l'un des éléments 13 de renfort est disposé dans la partie surélevée du fond 6.

Dans l'exemple représenté, les éléments 13 de renfort sont au nombre de deux et affectent chacun la forme d'une nervure 131 en saillie en direction de l'intérieur du pot 5. Ces nervures 131 sont des nervures circulaires qui délimitent chacune un périmètre fermé avec l'une des nervures 131 entourant l'autre nervure 131. Ces nervures 131 sont ainsi réalisées concentriques. Ces nervures 131 ménagent entre elles, à la manière de trottoirs, une surface d'appui sur laquelle au moins une partie des extrémités libres des tiges des fleurs peut reposer. En variante ou en complément de ce qui a été décrit ci-dessus, le ou au moins l'un des orifices 11 de passage d'eau peut être ménagé au niveau du ou de l'un des éléments 13 de renfort. Dans le cas où l'élément 13 de renfort a la forme d'une nervure avec un sommet et deux flancs, le ou au moins l'un des orifices 11 de passage d'eau peut être disposé au niveau du sommet de ladite nervure.

La mise en œuvre d'un dispositif 1 pour la présentation et la conservation d'un bouquet 14 de fleurs tel que décrit ci-dessus peut s'opérer à l'aide d'un poste de travail comprenant une table de conditionnement telle que décrite dans le brevet FR 2 884 683. Cette table est munie d'une ouverture.

L'enveloppe 3 sous forme de feuille est positionnée à plat, à recouvrement de l'ouverture de la table. Le conformateur est positionné sur l'enveloppe, au droit de l'ouverture de la table. Une pression d'entraînement du conformateur et de l'enveloppe à travers l'ouverture de la table est appliquée jusqu'à une première position où on remplit de liquide le conformateur et l'enveloppe, et où on insère les tiges du bouquet dans le conformateur. On poursuit l'application d'une pression sur le conformateur jusqu'à une deuxième position. Au cours de ce déplacement, on resserre l'enveloppe autour du conformateur et on déforme le conformateur par rapprochement des plis de la paroi 7 latérale périphérique plissée autour des tiges du bouquet par l'intermédiaire d'un organe 4 de serrage, de préférence élastique, pour former le col de la bulle autour des tiges. Le bouquet ainsi réalisé est ensuite extrait de la table.

## Revendications

1. Conformateur (2) pour la présentation de bouquet (14) de fleurs, ledit conformateur (2) étant recouvrable au moins partiellement par une enveloppe (3) souple imperméable à l'eau pour former en coopération avec ladite enveloppe (3) un vase à réserve d'eau en forme de bulle, **caractérisé en ce que** le conformateur (2) affecte la forme d'un pot (5), **en ce que** le pot (5) comprend un fond (6) et une paroi (7) latérale périphérique plissée, **en ce que** la paroi (7) latérale périphérique plissée se raccorde par l'un (8) de ses bords dit inférieur au fond (6) et délimite par son bord (9) supérieur opposé une ouverture (10) du pot (5), **en ce que** ladite paroi (7) latérale périphérique plissée, à plis dits (71, 72) axiaux s'étendant depuis le bord (9) supérieur en direction du bord (8) inférieur de ladite paroi (7), est une paroi souple déformable réalisée d'une seule pièce avec le fond (6) en une matière de synthèse et **en ce que** le pot (5) comprend au moins un orifice (11) pour le passage d'eau.

2. Conformateur (2) pour la présentation de bouquet (14) de fleurs selon la revendication 1, caractérisé en ce le ou au moins l'un des orifices (11) de passage d'eau est ménagé dans la paroi (7) latérale périphérique plissée du pot (5).

3. Conformateur (2) pour la présentation de bouquet (14) de fleurs selon l'une des revendication 1 ou 2, **caractérisé en ce qu'**au moins l'un des plis (71, 72) de la paroi (7) latérale périphérique plissée du pot (5) est un pli en escalier ménageant au moins une marche (12).

4. Conformateur (2) pour la présentation de bouquet (14) de fleurs selon la revendication 3, **caractérisé en ce qu'**au moins l'un des orifices (11) pour le passage d'eau est un orifice (11) axial disposé au niveau de ladite marche (12).

5. Conformateur (2) pour la présentation de bouquet (14) de fleurs selon l'une des revendications 1 à 4, **caractérisé en ce que** la paroi (7) latérale périphérique plissée s'évase en direction de l'ouverture (10) du pot (5).

6. Conformateur (2) pour la présentation de bouquet (14) de fleurs selon l'une des revendications 1 à 5, **caractérisé en ce qu'**au moins une partie du fond (6) du pot (5) est surélevée.

7. Conformateur (2) pour la présentation de bouquet (14) de fleurs selon l'une des revendications 1 à 6, **caractérisé en ce que** le fond (6) est muni d'au moins un élément (13) de renfort réalisé d'une seule pièce avec ledit fond (6).

8. Conformateur (2) pour la présentation de bouquet de fleurs selon la revendication 7, **caractérisé en ce que** les ou au moins deux des éléments (13) de renfort affectent chacun la forme d'une nervure (131) en saillie en direction de l'intérieur du pot (5), lesdites nervures (131) ou au moins deux desdites nervures (131) délimitant chacune un périmètre fermé avec l'une des nervures (131) entourant l'autre nervure (131).

9. Conformateur (2) pour la présentation de bouquet (14) de fleurs selon l'une des revendications 7 ou 8, caractérisé en ce le ou au moins l'un des orifices (11) de passage d'eau est ménagé au niveau du ou de l'un des éléments (13) de renfort.

10. Conformateur (2) pour la présentation de bouquet (14) de fleurs selon l'une des revendications 1 à 9, **caractérisé en ce que** la paroi (7) latérale plissée est formée d'une alternance de plis (71) nervurés creux ouverts en direction de l'intérieur du pot (5) et de plis (72) concaves à concavité tournée vers l'extérieur du pot (5) pour former, en vue en coupe transversale du pot (5), une crénelure.

11. Conformateur (2) pour la présentation de bouquet (14) de fleurs selon l'une des revendications 1 à 10, **caractérisé en ce que** chaque pli (71 ; 72) de la paroi (7) latérale périphérique plissée est délimité par deux flancs (710, 720) et un sommet (711 ; 721) de liaison desdits flancs (710 ; 720) et **en ce que** le sommet (711 ; 721) des plis nervurés est un sommet plat.

12. Conformateur (2) pour la présentation de bouquet (14) de fleurs selon l'une des revendications 1 à 11, **caractérisé en ce que** chaque pli (71 ; 72) de la paroi (7) latérale périphérique plissée est délimité par deux flancs (710, 720) et un sommet (711 ; 721) de liaison desdits flancs (710 ; 720) et **en ce que** le sommet (721) des plis (72) concaves est un sommet arrondi.

13. Dispositif (1) pour la présentation et la conservation de bouquet (14) de fleurs comprenant au moins un conformateur (2), une enveloppe (3) souple imperméable à l'eau positionnable à recouvrement au moins partiel du conformateur (2) pour former en coopération avec le conformateur (2) un vase à réserve d'eau en forme de bulle et un organe (4) de serrage de ladite enveloppe (3) sur le conformateur (2), **caractérisé en ce que** le conformateur est conforme à l'une des revendications 1 à 12.

14. Dispositif (1) pour la présentation et la conservation de bouquet (14) de fleurs selon la revendication 13, **caractérisé en ce que** à l'état posé de l'organe (4) de serrage, le conformateur (2) affecte la forme d'un pot conique ou tronconique avec la base du cône ou du tronc de cône formée par le fond (6) du pot (5).
